# EUROPEAN PATENT APPLICATION

(11) **EP 1 744 388 A1**
(43) Date of publication of application: **17.01.2007**
(21) Application number: 05727636.2
(22) Date of filing: 29.03.2005
(51) Int. Cl.: H01M 4/60, H01M 4/02, H01M 4/58, H01M 4/62, H01M 10/40

(54) **REDOX ACTIVE REVERSIBLE ELECTRODE AND SECONDARY BATTERY INCLUDING THE SAME**

(30) Priority: 30.03.2004 JP 2004101018
(71) Applicant: Oyama, Noboru, Musashino-shi, Tokyo 180-0002 (JP); FUJI JUKOGYO KABUSHIKI KAISHA, Tokyo 160-0023 (JP); Shirouma Science Co., Ltd., Shimoniikawa-gun, Toyama 939-0643 (JP); MITSUI & CO., LTD., Chiyoda-ku Tokyo-to 100-0004 (JP)
(72) Inventor: OYAMA, Noboru, Musashino-shi, Tokyo 1800002 (JP); SARUKAWA, Tomoo, c/o Fuji Jukogyo Kabushiki Kaisha, Tokyo 160-0023 (JP); SHIMOMURA, Takeshi, c/o SHIROUMA SCIENCE., LTD., Toyama 939-0643 (JP); YAMAGUCHI, Shuichiro, c/o SHIROUMA SCIENCE CO., LT, Toyama 939-0643 (JP); TANIGUCHI, Masahiko, c/o Fuji Jukogyo Kabu. Kaisha, Tokyo 160-0023 (JP); MATOBA, Toshiharu, c/o Fuji Jukogyo Kabus. Kaisha, Tokyo 160-0023 (JP); MIYAKAWA, Shinji, c/o SHIROUMA SCIENCE CO., LTD., Toyama 939-0643 (JP); SATO, Masonobu, c/o SHIROUMA SCIENCE CO., LTD., Toyama 939-0643 (JP)
(74) Representative: Jennings, Nigel Robin
(86) International application number: PCT/JP2005/005953
(87) International publication number: WO 2005/096417

(57) **Abstract**

A redox-active reversible electrode has a redox-active film on a surface of an electrically conductive substrate. The redox-active film includes a redox-active sulfur-containing substance which has at least one aromatic ring and a ring containing at least one disulfide bond, with a side of the disulfide-containing ring constituting a side of the aromatic ring, and which has a property that it is capable of reversibly releasing and receiving one or more electrons per disulfide-containing ring without the disulfide-containing ring being opened.

## Description

### Technical Field

The present invention relates to a redox-active (oxidation-reduction-active) reversible electrode used in an electrochemical device such as a battery, and a secondary battery using the same, and particularly, to a redox-active electrode having, on an electrically conductive substrate, a redox-active film capable of promptly performing an electron and charge transfer reaction, and a lithium secondary battery and a magnesium secondary battery using the same. In particular, the present invention relates to a lithium secondary battery or a magnesium secondary battery suitably used as a power source of a cell phone or an electric automobile requiring a high energy density.

### Background Art

Conventional lithium secondary batteries use a lithium-based inorganic metal oxide such as lithium cobaltate (LiCoO₂), lithium nickelate (LiNiO₂) or lithium manganate (LiMn₂O₄) for the positive electrode, and a carbon-based material for the negative electrode. It is known that the theoretical capacity is 100 to 150 Ah/kg for a positive electrode material, while it is 3 times or more for a negative electrode material (370 to 800 Ah/kg for carbon materials).

Such being the situation, in order to compose a lithium secondary battery of high performance, it is imperative to develop a positive electrode material capable of achieving a high energy density. Also, in order to enhance the safety of the lithium secondary battery, it attracts attentions to use a sulfide compound as the positive electrode material in place of the lithium-based metal oxides noted above. In general, a sulfur-based substance exhibits an oxidation-reduction reaction activity and has a high energy storing capability at a high energy density. This is because the sulfur atom forming the redox center has an atomic weight of 32, which is smaller than the atomic weights of cobalt (58), nickel (59) and manganese (55), and there is a probability that multi-electron transfer reaction may be utilized since the oxidation number of the sulfur atom can take a value of from -2 to +6. Among sulfur compounds, a compound such as a thiol is electrochemically active in many cases. In a thiol, a single sulfur atom reversibly releases and receives a single electron. Particularly, an organic compound having at least two thiol groups in a molecule, if oxidized on an electrode under the state the compound is dissolved in an electrolyte solution, is polymerized via the S-S bond so as to be precipitated on the electrode. This oxide has a property that it is depolymerized by reduction so as to be brought back to the original monomer. 2,5-dimercapto-1,3,4-thiadiazole (DMcT) may be cited as an example. Since this compound has two thiol groups per molecule, it is capable of releasing and receiving two electrons. In other words, it is possible to obtain a theoretical capacity at an energy density of 362 Ah per kilogram of DMcT from the redox reaction of DMcT. However, it was difficult to use such a sulfur compound as it is as the positive electrode material for some reasons given below. Firstly, it is impossible to obtain smooth charge-discharge characteristics because the electron transfer reaction is low at room temperature. Secondly, in the form of a thin film electrode having such a sulfur compound used for the redox reaction active layer, the redox reaction between the dithiol and the S-S bond does not necessarily proceed smoothly. To be more specific, the electricity (the amount of the charging electricity) used for oxidizing the dithiol is not recovered by 100% in the reducing process (discharge process), and the quantity of electricity is gradually decreased, if the oxidizing process and the reducing process are repeatedly carried out. This is because all the S-S bonds once formed are not brought back to the original reduced state.

Oyama, one of the present inventors, and others reported a positive electrode material formed of a composite material of 2,5-dimercapto-1,3,4-thiazole (DMcT) with polyaniline in Nature, vol. 373, 598-600 (1995) as an example of the solution to the first problem pointed out above. The positive electrode material formed of this composite material exhibits a rapid electron transfer reaction at room temperature. It is considered that this is because the polyaniline, which is an electron conductive polymer, accelerates the oxidation-reduction reaction rate of the organic sulfur-based compound. However, it was difficult to select the optimum reaction conditions because the oxidation-reduction response involves protons and is complicated and because the catalytic ability of the polyaniline exerted on the oxidation-reduction reaction of the sulfur compound is greatly dependent on the acidity of the electrolyte, i.e., on the proton concentration. Then, polypyrrole and polythiophene were selected as candidates among the electron conductive polymer materials in order to remove the influences of proton. As a result, it has been found that a compound having a thiophene ring coupled with two electron-donating oxygen atoms, particularly, poly (3,4-ethylenedioxythiophene) (also known as a polymer of 2,3-dihydroxythieno(3,4-b)(1,4)dioxine 5,7-diyl (abbreviated as PEDOT) and derivatives thereof catalyze the redox reaction of organic sulfur compound such as DMcT (N. Oyama et al., J. Electrochemical and Solid-State Letters, 6(12) A286-A289 (2003)).

As a method for solving the second problem noted above, Uemachi et al made the following proposal (U.S. Patent No. 5,348,819 specification). There, a positive electrode is proposed, which includes an aromatic compound having two thiol groups and capable of performing a reversible redox reaction such that, under the oxidized state, a neutral 5- or 6-membered ring is formed through the S-S bond and, under the reduced state, the ring is brought back to the anionic thiol groups. However, the reaction proposed therein cannot be reproduced, and the reversible redox response behavior pointed out in the U.S. Patent No. 5,348,819 specification noted above is not reported in the two related research articles, which were reported later, i.e., T. Inamasu et al., J. Electrochem, Soc., 150, A 128 (2003) directed to sulfur-containing naphthalene derivatives and L. J. Xue et al., Electrochem. Commun., 5, 903 (2003) directed to sulfur-containing anthracene derivatives. Thus, it is considered that the second problem has not yet been solved.

### Disclosure of Invention

The organic sulfur compound referred to above certainly has a high energy density, but it was difficult to increase the electric energy that can be taken out per unit weight of the battery and to perform the electron transfer repeatedly at a high speed.

Therefore, an object of the present invention is to achieve a positive electrode material capable of overcoming the above-noted problems inherent in the prior art by effectively utilizing the high energy density which the sulfur compound has, particularly to provide a positive electrode for a lithium secondary battery.

Another object of the present invention is to provide a positive electrode for a non-lithium secondary battery that permits taking out a large current relatively instantly, by combining with a negative electrode of a non-lithium material.

In order to utilize a sulfur-based (sulfide) compound as an active material of a positive electrode for a lithium secondary battery, the present inventors have conducted an extensive research on a substance that permits repeatedly carrying out the electron transfer reaction at a high speed and on its reaction conditions, and invented the following redox-active reversible electrode.

Thus, according to the present invention, there is provided a redox-active reversible electrode, comprising, on a surface of an electrically conductive substrate, a redox-active film comprising a redox-active sulfur-containing substance which has at least one aromatic ring and a ring containing at least one disulfide bond, with a side of the disulfide-containing ring constituting a side of the aromatic ring, and which has a property that it is capable of reversibly releasing and receiving one or more electrons per disulfide-containing ring without the disulfide-containing ring being opened.

Also according to the present invention, there is provided a lithium secondary battery or a non-lithium secondary battery, comprising a positive electrode, a lithium-based negative electrode or a non-lithium negative electrode, and an electrolyte layer arranged between the positive electrode and the negative electrode, wherein the positive electrode is constituted by the redox-active reversible electrode of the present invention.

### Brief Description of Drawings

FIG. 1 is a graph illustrating the CV characteristics under the state that the material that was to be used as the positive electrode material in Example 1 was dissolved in an electrolytic solution;
FIG. 2 is a graph illustrating the CV characteristics of the positive electrode material of Example 2;
FIG. 3 is a graph illustrating the CV characteristics of the positive electrode material of Example 4;
FIG. 4 is a graph illustrating the CV characteristics of the positive electrode material of Example 5; and
FIG. 5 is a graph illustrating the CV characteristics of the positive electrode material of Example 8.

### Best Mode for Carrying Out the Invention

The present invention will now be described in more detail below.

The redox-active reversible electrode of the present invention has a redox-active film formed on a surface of an electrically conductive substrate. The redox-active film of the present invention contains a redox-active sulfur-containing substance.

The redox-active sulfur-containing substance used in the present invention has at least one aromatic ring and a ring containing at least one disulfide bond, with a side of the disulfide-containing ring constituting a side of the aromatic ring, and has a property that it is capable of reversibly releasing and receiving one or more electrons per disulfide-containing ring without the disulfide-containing ring being opened. Such a sulfur-containing substance includes an organic sulfur compound having an aromatic moiety comprising at least one aromatic ring and a sulfur-containing ring moiety having a disulfide-containing heterocyclic ring including at least one disulfide bond and having at least one side of the aromatic ring as a common side. In this connection, the aromatic ring and the disulfide-containing heterocyclic ring share at least one side of the ring. Usually, the aromatic ring and the disulfide-containing heterocyclic ring have at least two carbon atoms as shared atoms. The aromatic moiety includes a condensed polycyclic skeleton having at least one benzene ring or a nitrogen-containing heterocyclic ring. Examples of the condensed polycyclic skeleton include, for example, condensed polycycles such as a polyacene such as naphthalene, naphthacene, tetracene and hexacene, and a hydro form thereof (e.g., dihydrohexacene and tetrahydrohexacene), and perylene. Further, pyrrole is an example of the nitrogen-containing heterocyclic ring. With regard to at least one disulfide bond, in the case of a polysulfide bond in which an n-number (n ≧ 3) of sulfur atoms are consecutively bonded, the polysulfide is regarded as having (n-1) disulfide bonds in the present invention.

The sulfur-containing substance is preferably an organic sulfur-containing substance whose disulfide-containing ring is not opened or closed by the redox reaction at its sulfur portion, and which is charged +1 and/or +2 and/or -1 per disulfide-containing ring, and its one disulfide-containing ring in the neutral state is not two-electron reduced and its sulfur active portion is not converted into a thiol group.

Further, it is desirable that the potential at which the redox reaction of the sulfur-containing substance falls within a range of +2.0 to 4.5V in terms of the potential with a lithium metal electrode used as a reference electrode. In some of the sulfur-containing substances used in the present invention, the disulfide-containing ring is two-electron reduced at a potential of 1.9V or less so as to convert the sulfur active portion into a thiol group. In this case, the redox reaction between the thiol group and the S-S bond ceases to be brought about smoothly within the molecule so as to loose the reversibility, as pointed out previously. Thus, in the U.S. Patent No. 5,348,819 quoted previously, it is recommended to bring the sulfur active portion back to the thiol group under the reduced state, or the discharged state of the positive electrode. However, the charge-discharge mode is undesirable because the reversibility of the reaction is lost.

The following compounds (1) to (11) and (12) to (14) given below are preferable as the redox-active sulfur-containing substance used in the present invention.

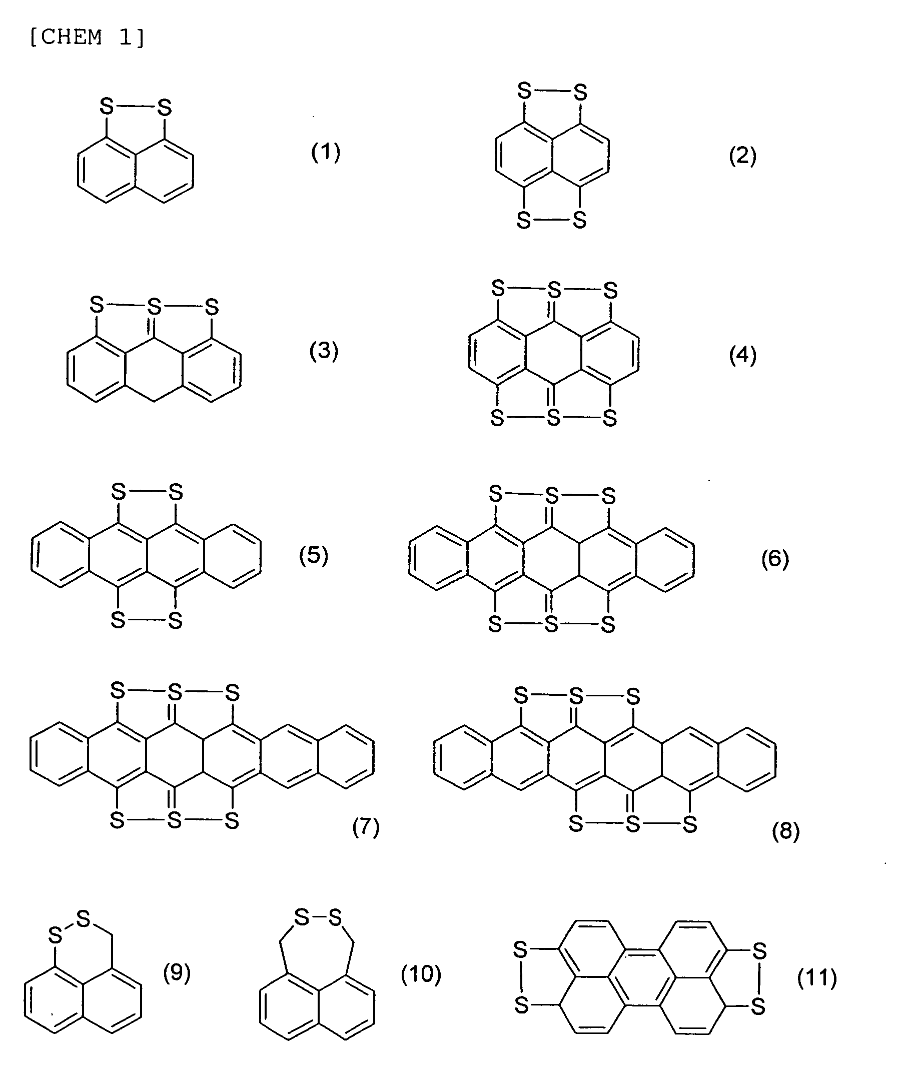

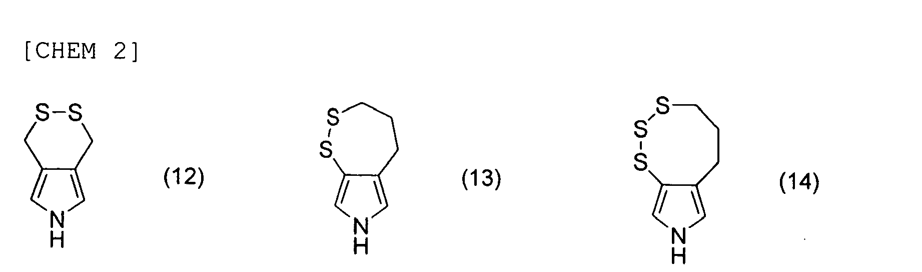

The compounds (1) to (11) given above may contain an alkyl group side chain on the carbon atom of the disulfide-containing ring, and may contain one or more of a halogen atom, a nitro group, an alkyl group, a hydroxyl group, a sulfonic group, a carboxylic group, and an amino group substituted on the aromatic ring moiety. Further, a polymerizable side chain such as a vinyl group or an acrylate group may be introduced on the aromatic ring moiety and a compound (polymer) obtained by polymerizing the polymerizable side chain may be used.

The compounds having the substituents referred to above may be represented by formulas (A) to (C) below:

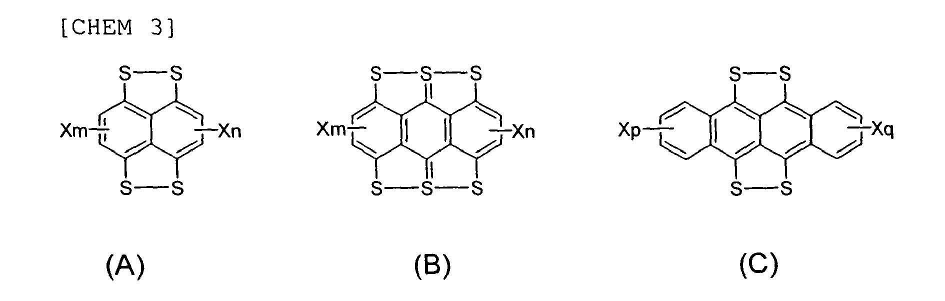

In the formulas (A) to (C), X denotes the substituent described above. Further, in the formulas (A) and (B), each of m and n independently denotes 1 or 2, and in the formula (C), each of p and q independently denotes an integer of 1 to 4.

Further, the compounds (1) to (11) may be in the form of a polymer in which at least two of them are linked at their terminal benzene rings through a thioether bond (-S-). Such a polymer can be represented by, for example, a formula (D) below:

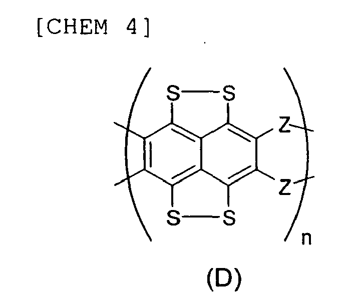

In the formula (D), each Z denotes -S-, and n is 2 to 200. Such a polymer can be synthesized by the method of Example 13 described later in detail.

The compounds (12) to (14) are preferably polymers polymerized at positions α and α' of the heterocyclic aromatic ring, and the disulfide-containing ring moiety may have one or more of an alkyl group, a hydroxyl group, a sulfonic acid group, a carboxylic acid group and an amino group.

In general, among the organic sulfur compounds used in the present invention, the compounds (1) to (11) may be used in the form of any of a monomer or a polymer. In the case of the compounds (12) to (14), it is possible to use a powder obtained by chemical oxidation polymerization using an oxidizing agent or to use a powder or a thin film obtained by electrolytic oxidation polymerization.

The redox-active film of the present invention exhibits an oxidation-reduction wave corresponding to the reversible redox response of the sulfur-containing substance.

The redox-active film of the present invention can be prepared by preferably adding carbon-based electrically conductive particles to a solid powder of the organic sulfur-containing substance, with an appropriate amount of a binder added, mixing, coating the mixture on a current collector substrate and molding it under pressure. From the thus obtained electrode, it is possible to take out a large current adapted for the practical use, e.g., a current of 0.1 to 3 mA/cm², even at a temperature in the vicinity of room temperature from the initial stage of the charge-discharge. As the carbon-based conductive particles (conductive carbon particles), a carbon black, Ketjenblack, acetylene black, graphite and a carbon nano tube may be exemplified. The conductive carbon particles may be used in an amount of 1 to 30 parts by weight based on 100 parts by weight of the organic sulfur-containing substance.

Further, the redox-active film of the present invention may contain a metal oxide and a metal complex. The metal oxide includes a layered metal oxide that can fix the sulfur-containing substance between the layers, such as vanadium pentoxide. The metal oxide also includes a redox-active compound such as lithium cobaltate (LiCoO₂), lithium nickelate (LiNiO₂) or lithium manganate (LiMn₂O₄). In this case, it is possible to utilize the energy-storing capability of each of the metal oxide and the organic sulfur compound.

Further, electrically conductive fine particles of metal such as copper, iron, silver, nickel, palladium, gold, platinum, indium or tungsten, or an electrically conductive metal oxide such as indium oxide or tin oxide may be mixed into the redox-active film of the present invention. These conductive fine particles is preferably made from silver, palladium, nickel, gold or copper, and a mixture of foreign kinds of conductive ultra fine particles may also be used.

The substrate (current collector) supporting the redox-active film of the present invention is an electrically conductive substrate exhibiting an electric conductivity at least at that surface which contacts the redox-active film. The substrate may be formed of an electrically conductive material such as a metal, an electrically conductive metal oxide or carbon, and is preferably formed of copper, carbon, gold, aluminum or an alloy thereof. The substrate may be the one in which a body of the substrate, formed of the other material is covered with these conductive materials. In addition, the substrate may have an irregularity on the surface or may be in the form of a mesh.

Further, the redox-active film may contain a electron conductive polymer. For example, in a composite material prepared by doping the redox-active sulfur-containing substance in a polythiophene-based electron conductive polymer, a prompt electron transfer reaction can be achieved within the redox-active film and at the interface between the redox-active film and the current collector due to promoting action of the electron transfer reaction on the redox reaction of the sulfide-based compound.

Further, the redox-active film of the present invention may contain a metal complex such as lithium iron phosphate (lithium olivinate).

In the present invention, it is particularly desirable for the redox-active film to have a thickness of 10 to 100 µm. Also, it is desirable for the particles used in the present invention (e.g., the electron conductive polymer material, the sulfur compound, the conductive fine particles) to be smaller than the thickness of the redox-active film.

The redox-active reversible electrode of the present invention is preferably used in particular as a positive electrode of a lithium secondary battery. The lithium secondary battery comprises a positive electrode and a lithium-based negative electrode, and an electrolyte layer is provided therebetween. In the lithium secondary battery of the present invention, the positive electrode is formed of the redox-active reversible electrode of the present invention. The lithium-based negative electrode can be formed of a lithium-based metallic material such as metal lithium or a lithium alloy (e.g., a Li-Al alloy), or of a lithium intercalation carbon material. The lithium-based metallic material is preferably used in the form of a foil in view weight saving of the battery. The electrolyte layer interposed between the positive electrode and the negative electrode is preferably formed of a polymer gel containing a solution of an electrolyte (polymer gel electrolyte). As the electrolyte contained in the polymer gel electrolyte noted above, use may be made of a lithium salt such as CF₃SO₃Li, C₄F₉SO₃Li, (CF₃SO₂)₂NLi, (CF₃SO₂) ₃CLi, LiBF₄, LiPF₆, or LiClO₄. The solvent dissolving these electrolytes is preferably a nonaqueous solvent. Such a nonaqueous solvent includes, for example, a linear carbonate, a cyclic carbonate, a cyclic ester, a nitrile compound, an acid anhydride, an amide compound, a phosphate compound and an amine compound. Examples of the nonaqueous solvent include, for example, ethylene carbonate, propylene carbonate, diethyl carbonate, dimethoxyethane, γ-butyrolactone, N-methylpyrrolidinone, N,N'-dimethylacetamide, a mixture of propylene carbonate and dimethoxyethane, a mixture of ethylene carbonate and diethyl carbonate, and a mixture of sulfolane and tetrahydrofuran.

It is desirable to use a copolymer of acrylonitrile with methyl acrylate or methacrylic acid as the polymer gel. Incidentally, the polymer gel can be obtained by dipping the polymer noted above in a solution of the electrolyte or by polymerizing the constituent components of the polymer noted above (monomer/compound) in the presence of a solution of the electrolyte. It is also possible to suitably use a new polyolefin-based gel proposed by the present inventors of Oyama et al. (Japanese Patent Disclosure (Kokai) No. 2002-198095). This gel is a gel of a non-crosslinked polymer grafted by a compound containing an oligomer of polyethylene oxide such as polyethylene glycol containing about 10 mol % of polyethylene. This polymer quite differs in properties from the non-grafted polyethylene, absorbs a large amount of an organic electrolytic solution so as to be gelled and is capable of retaining the absorbed solution. It follows that the gel electrolyte can be obtained by dipping the polymer noted above in an electrolyte solution. It is also possible to obtain a polymer gel electrolyte integral with a substrate by applying, to a substrate, a reaction mixture of a solution of an electrolyte in an organic solvent with the non-crosslinked polymer noted above dissolved therein and added with a crosslinkable monomer, subjecting the crosslinkable monomer to reaction conditions for crosslinking polymerization of the crosslinkable monomer.

The redox-active reversible electrode of the present invention can also be used, in addition to as a positive electrode of a lithium secondary battery, as a positive electrode of a non-lithium battery (e.g., a magnesium secondary battery), in combination with a carbon material negative electrode formed of an electrically conductive polymer material that permits reversibly doping and de-doping the non-lithium ions or formed of an activated carbon material. This secondary battery comprises a positive electrode and a non-lithium negative electrode, and an electrolyte layer is interposed therebetween. The electrolyte layer interposed between the positive electrode and the negative electrode is preferable formed of a polymer gel (polymer gel electrolyte) containing a solution of an electrolyte. As the electrolyte salt, a BF₄⁻ salt, a PF₆⁻ salt, dodecylbenzene sulfonate and a tosylate salt of magnesium ion may be used. The solvent is preferably dissolved in a nonaqueous solvent, and is, for example, the nitrile compound, the carbonate compound or a mixture thereof described above with respect to the lithium secondary battery. Also the materials described above with respect to in the lithium secondary battery can be used as the polymer gel electrolyte.

The present invention will be described by way of Examples, but the present invention should not be limited to these Examples.

### Example 1

In order to examine the redox response on the compound (1) (naphtho[1,8-cd][1,2]dithiol, said compound was synthesized according to K. Yui et al., Bull. Chem, Soc., Jpn., 61, 953 (1988).

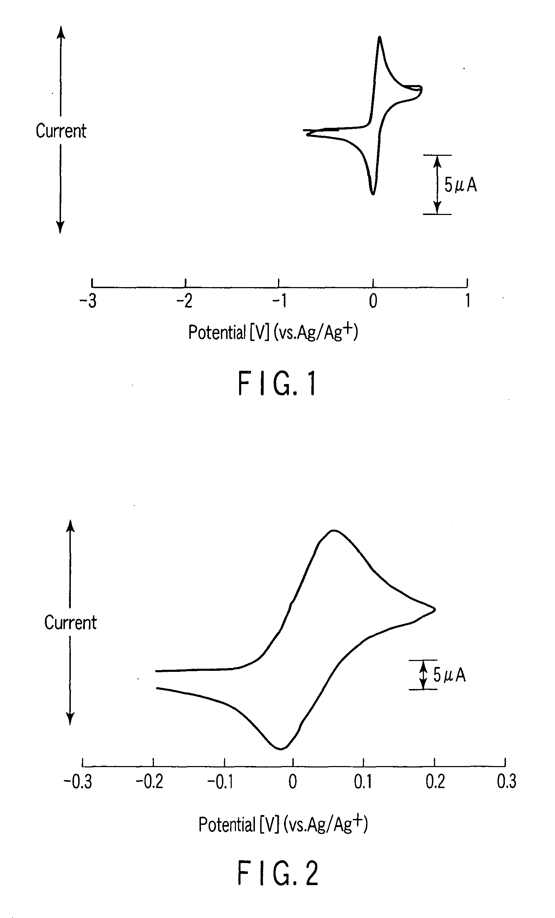

The redox response of said sulfur compound was examined by means of cyclic voltammetry (CV) using a glassy carbon (GC) electrode. A lithium metal electrode was used as a counter electrode, and a silver/silver ion electrode was used as a reference electrode. Using propylene carbonate (PC) and lithium perchlorate as an electrolyte salt, a PC solution containing 1.0M of lithium perchlorate was prepared as an electrolytic solution for performing the CV measurement. The compound (1) was dissolved in the electrolyte solution such that it became 1 mM, and a potential sweep was repeated at a sweeping rate of 20 mV/sec within a range of -3.0V to +0.5V (vs. the silver/silver ion electrode), i.e., within a range of +0.7V to 4.2V (vs. the lithium electrode). FIG. 1 illustrates the CV behavior. As apparent from this Figure, a reversible response was obtained in respect of the oxidation wave and the reduction wave within a range of -0.8V to +0.5V (+2.9V to +4.2V vs. the lithium electrode). It was seen from this response that the oxidation-reduction potential in the redox reaction of the compound above is on the positive side, indicating that it has an excellent electrochemical activity. On the other hand, when the potential sweeping range was set at -3.0V to -0.8V (+0.7V to +2.9V vs. the lithium electrode), the current response performance by the repetition of CV became poor, indicating that the reversibility becomes poor if the disulfide ring portion is opened.

### Example 2

The compound (1) was dissolved and dispersed in N-methyl pyrrolidone (hereinafter abbreviated as NMP), and Ketjenblack as an electrically conductive carbon powder and a polymer as a binder were added to prepare a paste-like liquid, which was coated on a GC electrode to prepare a working electrode. A lithium metal electrode was used as a counter electrode, and a silver/silver ion electrode was used as a reference electrode. The CV measurement was conducted at a sweeping rate of 20 mV/sec within a potential range of -0.2V to +0.2V vs. the silver ion electrode (+3.5V to +3.9V vs. the lithium electrode). Using propylene carbonate (PC) and lithium perchlorate as an electrolyte salt, a PC solution containing 0.1M of lithium perchlorate was prepared for performing the CV measurement. The CV behavior is illustrated in FIG. 2. An oxidation-reduction current response having a good reversibility was obtained in the vicinity of 0V as in the dissolved system. The current response only decreased gradually by repetition of the potential sweep. This gradual decrease was caused by the dissolution of the active material from the film into the solution. It was possible to prevent this decrease by using a polymer gel as the electrolyte. However, when the potential sweep was performed within a widened range of -3.0V to -0.8V (+0.7V to +4.2V vs. the lithium electrode), the current response performance was markedly impaired by the repetition of CV, indicating that the reversibility is lost if the disulfide ring portion is opened.

### Example 3

The compound (1) was sulfonated with a concentrated sulfuric acid (H₂SO₄), and the redox response properties of the electrode covered therewith was examined. First, the sulfonation was performed by a general method in which 1g of the compound (1) was dissolved in 10 milliliters of a concentrated sulfuric acid and stirred at 60°C for one hour. The deep green paste-like liquid was turned reddish purple in accordance with lapse of the stirring time. To this liquid, 30 milliliters of distilled water was added, providing a precipitate. The precipitate was filtered and, then, repeatedly washed with distilled water and finally with acetone. The washed precipitate was dried at 60°C in vacuo.

A known amount of the obtained compound was dissolved and dispersed in NMP, and an electrically conductive carbon powder of Ketjenblack and a polymer as a binder were added to prepare a paste-like liquid, which was coated on a GC substrate and dried to prepare a working electrode. A lithium metal electrode was used as a counter electrode, and a silver/silver ion electrode was used as a reference electrode. The CV measurement was performed at the sweeping rate of 20 mV/sec within a potential range of -1.0V to +0.5V vs. the silver/silver ion electrode (+1.7V to +4.2V vs. the lithium electrode). Using propylene carbonate (PC) as a nonaqueous solvent and lithium perchlorate as an electrolyte salt, a PC solution containing 0.1M of lithium perchlorate was prepared as an electrolytic solution for performing the CV measurement. An oxidation-reduction current response having a good reversibility was obtained as in Example 2. However, the potential range of the redox response was broadened, and the repeating stability was markedly improved, as compared with Example 2. However, when the sweeping range of the potential was broadened to -3.0V to +0.5V (+0.7V to +4.2V vs. the lithium electrode), the current response properties were rendered poor by the repetition of CV, indicating that the reversibility was lost if the disulfide ring portion was opened.

### Example 4

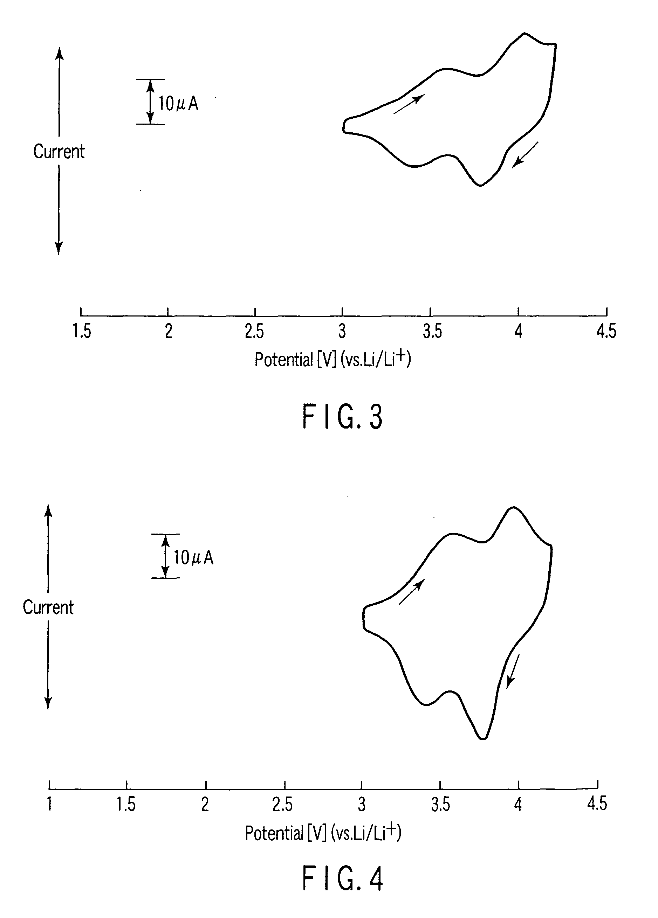

In order to examine the redox response of the compound (4), said compound was synthesized in accordance with N. R. Ayyangar et al., Indian J. Chem. B16,673 (1978). In order to examine the redox response characteristics of an electrode covered with this organic sulfur compound, said compound was dissolved and dispersed in NMP, and an electrically conductive carbon powder of Ketjenblack and a polymer as a binder were added to prepare a paste-like liquid, which was coated on a GC electrode to prepare a working electrode. Lithium metal electrodes were used as a counter electrode and as a reference electrode. The CV measurement was performed at a sweeping rate of 1 mV/sec within a potential range of +3.0V to +4.2V (vs. the lithium electrode). Using a mixed solution of ethylene carbonate (EC) with diethyl carbonate (DEC) (weight ratio of 1 : 3) and lithium tetrafluoroborate as an electrolyte salt, an electrolyte solution having a concentration of 1.0M was prepared as an electrolytic solution for performing the CV measurement The CV behavior is illustrated in FIG. 3. An oxidation-reduction response having a good reversibility was obtained in the vicinity of 3.7V. However, when the potential sweep was performed within a broadened range of +1.5V to +4.2V vs. the lithium electrode, the current response capability was rendered poor by the repetition of CV, indicating that the reversibility was lost if the disulfide ring portion was opened.

### Example 5

The compound (4) was sulfonated with a concentrated sulfuric acid (H₂SO₄), and the redox response characteristics of an electrode covered therewith was examined. First, the sulfonation was performed by a general method in which 1g of compound (4) was dissolved in 10 milliliters of a concentrated sulfuric acid and stirred at 60°C for 3 hours. When the concentrated sulfuric acid was added, the paste-like liquid was promptly turned deep red. After the stirring for 3 hours, 30 milliliters of distilled water were added to this liquid, giving a precipitate. The precipitate was filtered, and repeatedly washed with distilled water and finally with acetone. The washed precipitate was dried at 60°C in vacuo.

In order to examine the redox response characteristics of an electrode covered with this organic sulfur compound, said organic compound was dissolved and dispersed in NMP, and an electrically conductive carbon powder of Ketjenblack and a polymer as a binder was added to prepare a paste-like liquid, which was coated on a GC electrode and dried to prepare a working electrode. Lithium metal electrodes were used as a counter electrode, and as a reference electrode. The CV measurement was performed at a sweep rate of 1 mV/sec within a potential range of +3.0V to +4.2V (vs. the lithium electrode). Using a mixed solution of ethylene carbonate (EC) with diethyl carbonate (DEC) (weight ratio of 1 : 3) and lithium tetrafluoroborate as an electrolyte salt, an electrolyte solution having a concentration of 1.0M was prepared as an electrolytic solution for performing the CV measurement. The CV behavior is illustrated in FIG. 4. An oxidation-reduction response having a good reversibility was obtained in the vicinity of 3.7V. However, the repeating stability of the redox response was markedly improved, as compared with Example 3. However, when the potential sweep was performed within a broadened range of +1.5V to +4.2V vs. the lithium electrode, the current response performance was rendered poor by the repetition of CV, indicating that the reversibility was lost if the disulfide ring portion was opened.

### Example 6

In order to examine the redox response of the compound (5), said compound was synthesized in accordance with Indian J. Chem. B16,673 (1978) referred to above. In order to examine the redox response characteristics of the electrode covered with this organic sulfur compound, said compound was dissolved and dispersed in NMP, and an electrically conductive carbon powder of Ketjenblack and a polymer as a binder were added to prepare a paste-like liquid, which was coated on a GC electrode and dried to prepare a working electrode. Lithium metal electrodes were used as a counter electrode and as a reference electrode. The CV measurement was preformed at a sweeping rate of 1 mV/sec within a potential range of +2.7V to +4.2V (vs. the lithium electrode). Using a mixed solution of ethylene carbonate (EC) with diethyl carbonate (DEC) (weight ratio of 1 : 3) and lithium tetrafluoroborate as an electrolyte salt, an electrolyte solution having a concentration of 0.1M was prepared as an electrolytic solution for performing the CV measurement. In the CV behavior, two sharp oxidation waves having peak potential values in the vicinity of 3.4V and 3.6V as well as three sharp reduction waves having peak potential values in the vicinity of 3.2V, 3.0V and 2.9V were obtained. However, when the potential sweep was performed within a broadened potential range of +1.7V to +4.2V vs. the lithium electrode, the current response performance was rendered poor by the repetition of the CV, indicating that the reversibility was lost if the disulfide ring portion was opened.

### Example 7

Compound (5) was sulfonated with a concentrated sulfuric acid (H₂SO₄) and the redox response characteristics of an electrode covered therewith was examined. First, the sulfonation was performed by a general method in which 1g of the compound (5) was dissolved in 10 milliliters of a concentrated sulfuric acid and stirred at 60°C for 15 hours. Even when the concentrated sulfuric acid was added, the paste-like liquid remained deep green and did not change. After the stirring for 15 hours, 30 milliliters of distilled water was added to this liquid to provide a precipitate. The precipitate was filtered, and repeatedly washed with distilled water and finally with acetone. The washed precipitate was dried at 60°C in vacuo.

In order to examine the redox response of an electrode covered with this organic sulfur compound, said organic compound was dissolved and dispersed in NMP, and an electrically conductive carbon powder of Ketjenblack and a polymer as a binder were added to prepare a paste-like liquid, which was coated on a GC electrode and dried prepare a working electrode. Lithium metal electrodes were used as a counter electrode and as a reference electrode. The CV measurement was performed at a sweeping rate of 1 mV/sec within a potential range of +2.7V to +4.2V (vs. the lithium electrode). Using a mixed solution of ethylene carbonate (EC) with diethyl carbonate (DEC) (weight ratio of 1 : 3) and lithium tetrafluoroborate as an electrolyte salt, an electrolyte solution having a concentration of 1.0M was prepared as an electrolytic solution for performing the CV measurement. In the CV behavior, two sharp oxidation waves having peak potential values in the vicinity of 3.4V and 3.6V as well as three sharp reduction waves having peak potential values in the vicinity of 3.2V, 3.0V and 2.9V were obtained. However, the repeating stability of the redox response was increased, as compared with Example 6. However, when the potential sweep was performed within a broadened potential range of +0.5V to +4.2V vs. the lithium electrode, the current response was rendered poor by the repetition of the CV, indicating that the reversibility was lost if the disulfide ring portion was opened.

### Examples 8-10

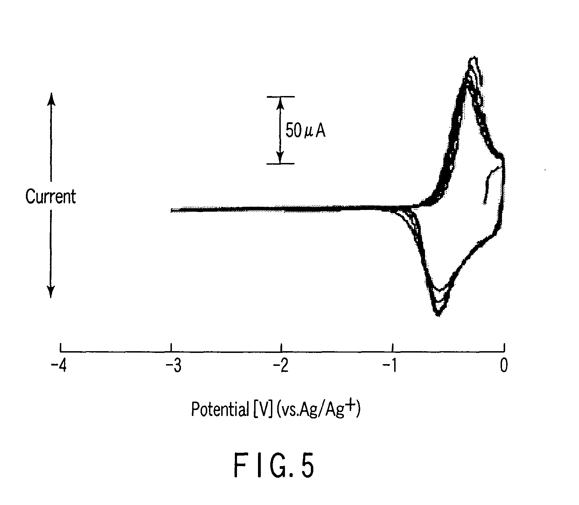

The compounds (12) to (14) were synthesized in accordance with Japanese Patent Disclosure (Kokai) No. 2002-141065. The cyclic voltammetry (CV) was measured by using said compounds. Using propylene carbonate (PC) and lithium perchlorate as an electrolyte salt, a PC solution containing 0.1M of lithium perchlorate was prepared as an electrolyte solution. Into this electrolyte solution, the compound (12) was dissolved such that it became 10 mM, and a potential sweep was repeated at a sweeping rate of 10 mV/sec within a potential range of from +0.2V to +1.4V (vs. the silver/silver ion reference electrode) so as to form an electrolytic polymer film on the electrode (hereinafter this is referred to as electrode covered with compound (12)). FIG. 5 illustrates the CV behavior of the electrode covered with compound (12) within the electrolyte solution not containing the compound (12). It was seen from these results, the film that was electrolytically polymerized by the method described above exhibited an excellent redox activity having a reversible oxidation-reduction peak potential value at -0.4V. Incidentally, the current response of the electrode covered with compound (12) was not deteriorated even when the potential sweep range was broadened to -3.0V to 0V (+0.7V to +3.7V vs. the lithium electrode). When the compounds (13) and (14) were used, the electrodes covered with these compounds also exhibited reversible redox responses having the oxidation-reduction peak potential values at -0.25V and -0.20V, respectively, obtaining a behavior similar to that using the compound (12).

### Example 11

3,4,7,8-tetrachloronaphtho[1,8-cd:4,5-c'd'] bis[1,2]diol (abbreviated as TTN-4Cl), in which the α, α'-positions of the naphthalene ring of the compound (2) are substituted by four chlorines, was synthesized in accordance with E. Klingsberg, Tetrahedron, 28, 963 (1972). 15g of octachloronaphthalene and 6g of sulfur were put into a 200 milliliter flask and the temperature was raised to 310°C under a nitrogen gas stream. The mixture was maintained at 310°C for about 20 minutes, though sulfur dichloride was generated in a large amount on the way, and then gradually cooled to room temperature. Reflux with carbon disulfide and washing with water were repeated twice. After filtration, drying was conducted in vacuo s to give the aimed product. TTN-4Cl could be obtained at a yield of 75% as in E. Klingsberg, Tetrahedron, 28, 963 (1972).

In order to examine the redox response characteristics of the electrode covered with this organic sulfur compound, said compound was dissolved and dispersed in NMP, and an electrically conductive carbon powder of Ketjenblack and a polymer as a binder were added to prepare a paste-like liquid, which was coated on a GC electrode and dried to prepare a working electrode. Lithium metal electrodes were used as a counter electrode and as a reference electrode. The CV measurement was performed at a sweeping rate of 1 mV/sec within a potential range of +2.7V to +4.2V (vs. the lithium electrode). Using a mixed solution of ethylene carbonate (EC) with diethyl carbonate (DEC) (weight ratio of 1 : 3) and lithium tetrafluoroborate as an electrolyte salt, an electrolyte solution having a concentration of 1.0M was prepared as an electrolytic solution for performing the CV measurement. In the CV behavior, two sharp oxidation waves having peak potential values in the vicinity of 3.8V and 3.9V as well as two sharp reduction waves having peak potential values in the vicinity of 3.8V and 3.7V were obtained.

### Example 12

In order to increase the repeating stability of the redox reaction of the electrode covered with the compound described in Example 11, the coating film on the coated electrode manufactured by the same method as above was dried, and the film surface was further covered with an appropriate amount of a mixed solution consisting of water and an alcohol, containing 5% by weight of NAFION, which is a perfluoro ion exchanger, and dried to prepare a working electrode.

Lithium metal electrodes were used as a counter electrode and as a reference electrode. The CV measurement was performed at a sweeping rate of 1 mV/sec within a potential range of +3.0V to +4.2V (vs. the lithium electrode). Using a mixed solution of ethylene carbonate (EC) with diethyl carbonate (DEC) (weight ratio of 1 : 3), and lithium tetrafluoroborate as electrolyte salt, an electrolyte solution having a concentration of 1.0M was prepared as an electrolytic solution for performing the CV measurement. Oxidation waves having peak potential values in the vicinity of 3.8V and 3.9V as well as two sharp reduction waves having peak potential values in the vicinity of 3.8V and 3.7V were obtained. In this case, the response was not decreased even after the potential sweep for 4 hours or more, and the repeating stability of the redox response was markedly increased, as compared with Example 11.

### Example 13

In order to examine the redox response relating to a polymer in which the α,α'-positions of the naphthalene ring of the compound (2) were linked by a thioether (-S-), said compound was synthesized by adding a new process to the synthetic method of E. Klingsberg, Tetrahedron, 28,963 (1972) referred to in Example 11. In this method, the reaction was carried out at 310°C for 20 minutes without isolating TNN-4Cl described in Example 11, followed by adding 5g of sodium sulfide nonahydrate to the flask containing TTN-4Cl cooled to 100°C. Then, the temperature was raised again to 330°C and maintained thereat for about 30 minutes. After cooling, the supply of the nitrogen gas stream was stopped, 100 milliliters of carbon disulfide was poured into the reaction mixture and heated under reflux. After cooling again, a black solid was obtained by filtration. This solid was pulverized, suspended in 100 milliliters of carbon disulfide, and heated under reflux. After cooling again, filtration was conducted and the solid was sufficiently washed with 200 milliliters of water and dried. Further, the solid was washed with 1,2-dichlorobenzene, filtered and dried to give 0.7g of a black solid. The infrared spectroscopic spectrum of the black solid obtained differed from that of TTN-4Cl, and relatively strong absorptions were newly generated at 570 cm⁻¹, 645 cm⁻¹, 750 cm⁻¹, 1070 cm⁻¹, 1140 cm⁻¹, and 1400 cm⁻¹. Since it is known that the stretching vibration ascribed to C-S bond is generated in the region of 700 to 600 cm⁻¹, the newly generated absorptions suggest that a bond of thioether exists. Also, in the spectrum of X-ray photoelectron spectroscopy (ESCA), the spectrum based on Cl(2p) of TTN-4Cl exhibits a peak value at 200 eV. However, in the powder obtained by this synthesis, the intensity of said spectrum was 1% or less, and no chlorine was detected. Also, a spectrum is obtained, in which the bond energy of S(2p) of TTN-4Cl exhibits a peak value at 163 eV. However, it was observed in the powder obtained by this synthesis that the intensity of the spectrum noted above was 1.5 times higher, thus the sulfur content was increased, and a new spectrum (165 eV) was included therein. These facts suggest that at least two kinds of sulfurs differing from each other in the bonding mode exist. The elementary analysis of TTN-4Cl was C: 30.8%, H: 0.2% or less, S: 33.7% and Cl: 36.3%, by weight, and this corresponds to a molecular formula of C₁₀S_{4.1}Cl_{3.98} when the number of carbons is set at 10. Since the structural formula of TTN-4Cl is C₁₀S₄Cl₄, the valued of both formulas are very close to each other. It was confirmed by the results of the elementary analysis and the results of the X-ray photoelectron spectroscopy (ESCA) that chlorine remaining in the black powder of the present invention obtained by adding sodium sulfide during the reaction was 1% or less. Further, the percentage of sulfur, which is changed depending on the amount of sodium sulfide added during the reaction, is 1.5 to 1.6 times the value obtained from TTN-4Cl. In other words, it has been clarified that two sulfur atoms on the average were newly introduced into the naphthalene ring unit and consumed for the polymerization.

Next, in order to examine the redox response characteristics of an electrode covered with this organic sulfur compound, said compound was dissolved and dispersed in NMP, and an electrically conductive carbon powder of Ketjenblack and a polymer as a binder were added to prepare a paste-like liquid material, which was coated on a GC electrode and dried to prepare a working electrode. Lithium metal electrodes were used as a counter electrode, and as a reference electrode. The CV measurement was carried out at a sweeping rate of 1 mV/sec within a potential range of +2.7V to +4.2V (vs. the lithium electrode). Using a mixed solution of ethylene carbonate (EC) with diethyl carbonate (DEC) (weight ratio of 1 : 3) and lithium tetrafluoroborate as an electrolyte salt, an electrolyte solution having a concentration of 1.0M as an electrolytic solution for performing the CV measurement. In the CV behavior, two overlapped oxidation waves having peak potential values in the vicinity of 4.0V to 4.1V as well as two sharp reduction waves having peak potential values in the vicinity of 4.0V to 3.8V were obtained. The response stability was very good and was not decreased even after the potential sweep for several hours.

## Claims

1. A redox-active reversible electrode, comprising, on a surface of an electrically conductive substrate, a redox-active film comprising a redox-active sulfur-containing substance which has at least one aromatic ring and a ring containing at least one disulfide bond, with a side of the disulfide-containing ring constituting a side of the aromatic ring, and which has a property that it is capable of reversibly releasing and receiving one or more electrons per disulfide-containing ring without the disulfide-containing ring being opened.

2. The electrode according to claim 1, wherein the disulfide-containing ring of the sulfur-containing substance is not opened or closed by the redox reaction at its sulfur portion, and is charged +1 and/or +2 and/or -1 per ring.

3. The electrode according to claim 1, wherein a potential at which a redox reaction of the sulfur-containing substance occurs is at +2.0 to 4.5 volts in terms of a potential with a lithium metal electrode as a reference electrode.

4. The electrode according to claim 1, wherein the sulfur-containing substance is at lease one selected from the group consisting of compounds (1) to (11) below, compounds (12) to (14) below, and derivatives and polymers thereof:

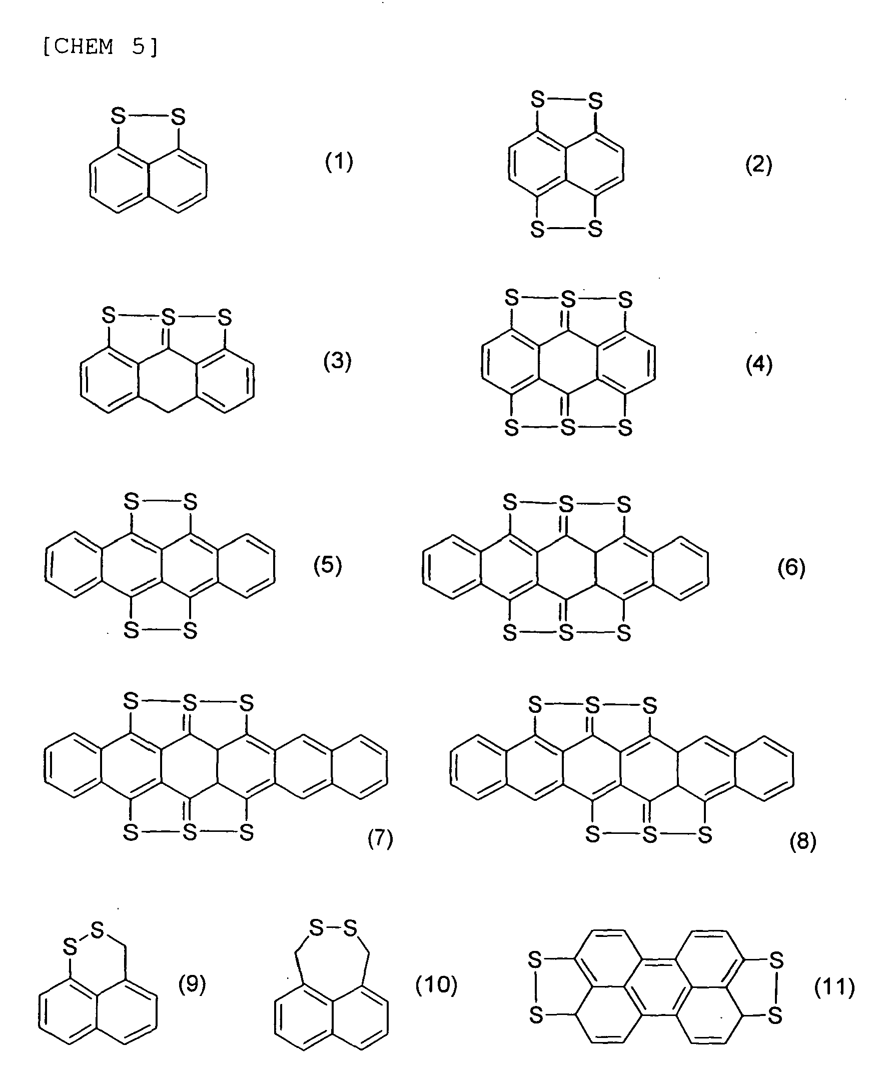

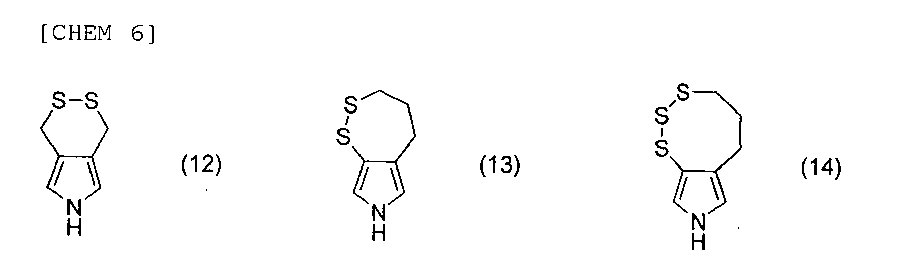

5. The electrode according to claim 1, wherein the sulfur-containing substance is at least one compound selected from the group consisting of compounds represented by formulas (A) to (C) below: 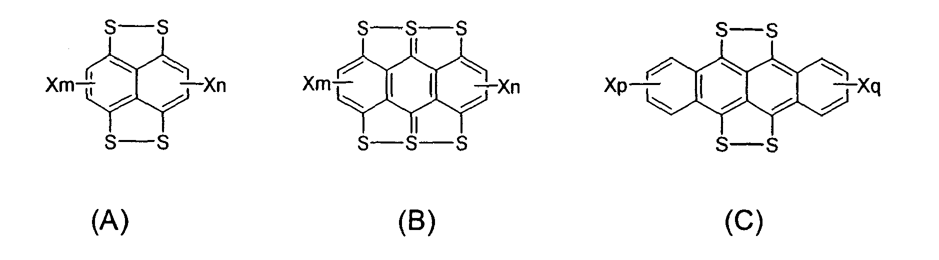 where X denotes a substituent, m and n each independently denote 1 or 2, and p and q each independently denote an integer of 1 to 4.

6. The electrode according to claim 1, wherein the sulfur-containing substance is at least one compound represented by a formula (D) below: 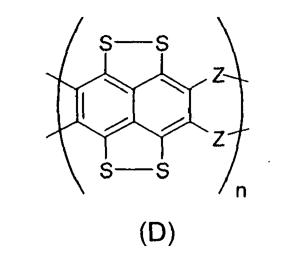 where Z denotes -S-, and n denotes an integer of 2 to 200.

7. The electrode according to claim 1, wherein the redox-active film further comprises an electron conductive polymer, carbon-based electrically conductive particles, fine particles of a metal oxide, fine particles of a metal complex and/or fine particles of metal.

8. The electrode according to claim 7, wherein the electron conductive polymer comprises a polythiophene compound, a polypyrrole compound or a polyaniline compound.

9. The electrode according to claim 7, wherein the metal oxide comprises an intercalation compound capable of fixing the sulfur-containing substance between layers.

10. The electrode according to claim 7, wherein the metal oxide comprises at least one redox-active compound selected from the group consisting of lithium cobaltate (LiCoO₂), lithium nickelate (LiNiO₂), and lithium manganate (LiMn₂O₄).

11. The electrode according to claim 7, wherein the metal complex comprises lithium iron phosphate (lithium olivinate).

12. A lithium secondary battery comprising a positive electrode, a lithium-based negative electrode, an electrolyte layer disposed between the positive electrode and the negative electrode, wherein the positive electrode is constituted by a redox-active reversible electrode according to claim 1.

13. A secondary battery comprising a positive electrode, a non-lithium negative electrode, an electrolyte layer disposed between the positive electrode and the negative electrode, wherein the positive electrode is constituted by a redox-active reversible electrode according to claim 1.
